# EUROPEAN PATENT APPLICATION

(11) **EP 4 675 823 A1**
(43) Date of publication of application: **07.01.2026**
(21) Application number: 24895402.6
(22) Date of filing: 09.05.2024
(51) Int. Cl.: H01M 50/457, H01M 50/434, H01M 50/451, H01M 10/054, H01M 10/052

(54) **BATTERY SEPARATOR, SECONDARY BATTERY, AND ELECTRICAL APPARATUS**

(30) Priority: 29.11.2023 CN 202311622649
(71) Applicant: Contemporary Amperex Technology Co., Limited, Ningde, Fujian 352100 (CN)
(72) Inventor: LV, Juan, Ningde, Fujian 352100 (CN); AI, Shaohua, Ningde, Fujian 352100 (CN); ZHENG, Yi, Ningde, Fujian 352100 (CN); CHEN, Yu, Ningde, Fujian 352100 (CN); ZHOU, Xin, Ningde, Fujian 352100 (CN)
(74) Representative: Ziebig Hengelhaupt Intellectual Property Attorneys Patentanwaltskanzlei PartGmbB
(86) International application number: PCT/CN2024/091984
(87) International publication number: WO 2025/112291

(57) **Abstract**

The present application provides a battery separator. The battery separator includes a base film and a ceramic coating located on at least one side of the base film, where a difference between a contact angle of the base film and a contact angle of the ceramic coating is less than or equal to 15 degrees. The battery separator in the present application has high adhesion, high liquid retention, and high ionic conductivity, thereby improving the cycle characteristics and the rate characteristics of a battery.

## Description

### CROSS-REFERENCE TO RELATED APPLICATIONS

The present application claims priority to Chinese Patent Application No. 202311622649.2, filed on November 29, 2023 and entitled "BATTERY SEPARATOR, SECONDARY BATTERY, AND POWER CONSUMING APPARATUS", which is incorporated herein by reference in its entirety.

### TECHNICAL FIELD

The present application relates to the technical field of batteries, and in particular, to a battery separator, a secondary battery, and a power consuming apparatus.

### BACKGROUND

In recent years, as the application scope of secondary batteries becomes increasingly wider, secondary batteries are widely used in energy storage power supply systems such as hydroelectric power stations, thermal power stations, wind power stations, and solar power stations, as well as a variety of fields such as electric tools, electric bicycles, electric motorcycles, electric vehicles, military equipment, and aerospace. Due to the great development of secondary batteries, higher requirements have been put forward for their energy densities, cycle performance, and safety performance.

At present, separator materials for secondary batteries are mainly PP and PE, which are key components of secondary batteries. The separator material has good pore size distribution, mechanical performance, chemical stability, electrolyte solution wettability, electronic insulation, and high-temperature pore-closing performance. However, existing separators made of PP or PE materials are non-polar and have low surface tension. As a result, the separator has poor wettability to an electrolyte solution and poor adhesion to a surface coating.

### SUMMARY

The present application is disclosed in view of the foregoing issue, and an objective of the present application is to provide a secondary battery separator with high adhesion, high liquid retention, and high ionic conductivity, a secondary battery having the separator, and a power consuming apparatus.

According to a first aspect of the present application, a battery separator is provided. The battery separator includes a base film and a ceramic coating located on at least one side of the base film, where a difference between a contact angle of the base film and a contact angle of the ceramic coating is less than or equal to 15 degrees.

Therefore, in the present application, by using the battery separator having the structure, the wettability of the separator to an electrolyte solution can be improved, and the adhesion of the separator to a surface coating (the ceramic coating) and the adhesion between the separator and positive and negative electrode plates can be improved, thereby achieving high adhesion, high liquid retention, and high ionic conductivity of the separator.

In any implementation, the base film is a base film after corona treatment, power P1 of the corona treatment ranges from 50 W to 200 W, a voltage V1 ranges from 100 V to 230 V, and a time T1 ranges from 0.1 s to 4 s. In addition, a material forming the substrate is not specifically limited. The base film includes one or more of polyethylene, polypropylene, polyimide, polyamide, polyethylene terephthalate, glass fiber, non-woven fabric, or a high-temperature-resistant polyester film, and optionally includes one or more of polyethylene or polypropylene.

In any implementation, the ceramic coating is a ceramic coating after corona treatment, power P2 of the corona treatment ranges from 50 W to 500 W, a voltage V2 ranges from 100 V to 230 V, and a time T2 ranges from 0.1 s to 6 s. In addition, a material forming the ceramic coating is not specifically limited. The ceramic coating includes one or more of Al₂O₃, AlO(OH), SiO₂, TiO₂, MgO, CaO, ZnO₂, ZrO₂, or SnO₂, and optionally includes Al₂O₃.

Based on this, by performing corona treatment on the substrate or the ceramic coating, the surface energy of the material can be improved, and the processed material can be prevented from being damaged. Based on proper improvement on the surface energy of the material, the wettability of the separator to an electrolyte solution can be improved, and the adhesion to a surface coating and the adhesion between the separator and positive and negative electrode plates can be improved.

In any implementation, the separator further includes a bonding coating, the bonding coating is located on a side of the ceramic coating away from the base film, and a difference between the contact angle of the ceramic coating and a contact angle of the bonding coating ranges from 2 degrees to 15 degrees. In addition, a material forming the bonding coating is not specifically limited and may be a polymer. Specifically, the material may include one or more of polyvinylidene fluoride, a vinylidene fluoride-hexafluoropropylene polymer, a styrene-butadiene polymer, polyacrylic acid, styrene butadiene rubber, sodium carboxymethyl cellulose, polyamide, polyacrylonitrile, polyacrylates, polyacrylate, or hydroxymethyl cellulose sodium, and optionally include polyvinylidene fluoride.

The material is used to form the bonding coating and the difference between the contact angle of the ceramic coating and the contact angle of the bonding coating falls within the range, so that the surface energy of the bonding coating can be close to the surface energy of the ceramic coating, thereby achieving a good adhesion effect.

In any implementation, the bonding coating is a bonding coating after corona treatment, power P3 of the corona treatment ranges from 50 W to 600 W, a voltage V3 ranges from 100 V to 230 V, and a time T3 ranges from 0.1 s to 5 s.

Based on this, by setting the corona treatment to the foregoing conditions, surface processing on the material can be implemented, that is, the surface energy of the material is properly improved, and the corona-treated material can be prevented from being damaged.

In any implementation, the contact angle of the base film ranges from 60 degrees to 80 degrees. The contact angle of the ceramic coating ranges from 60 degrees to 80 degrees. The contact angle of the bonding coating ranges from 40 degrees to 60 degrees.

The contact angle of the base film and the contact angle of the ceramic coating fall within the foregoing ranges, so that the surface energy of the base film can be close to the surface energy of the ceramic coating, thereby achieving a good adhesion effect between the base film and the ceramic coating. The contact of the bonding coating falls within the foregoing range, so that an effect that the separator is adhered to an electrode plate can be better achieved.

In any implementation, a liquid absorbing rate of the separator ranges from 4.5 mm/s to 6 mm/s. The separator has the liquid absorbing rate falling with the foregoing range, so that when the separator is immersed in an electrolyte solution, the electrolyte solution can quickly soak the separator to implement fast conduction of ions, thereby improving ionic conductivity of a battery, and further improving the cycle performance and the rate characteristics of the battery.

In any implementation, a bonding force between the base film and the ceramic coating ranges from 2.5 N/mm to 4 N/mm. When the bonding force between the base film and the ceramic coating falls within the foregoing range, a structure of the separator is more compact, so that the separator can better implement a function thereof, thereby improving the cycle performance and the rate characteristics of a battery.

According to a second aspect of the present application, a secondary battery is provided, including a positive electrode plate, a negative electrode plate, and a separator.

The secondary battery in the present application has the separator in the present application, thereby having high cycle characteristics and high rate characteristics.

In any implementation, the separator further includes a bonding coating located on a side of the ceramic coating away from the base film, and a difference between a contact angle of the positive electrode plate and a contact angle of the bonding coating is less than or equal to 20 degrees; and/or a difference between a contact angle of the negative electrode plate and the contact angle of the bonding coating is less than or equal to 20 degrees. The contact angle of the positive electrode plate ranges from 40 degrees to 80 degrees; and/or the contact angle of the negative electrode plate ranges from 40 degrees to 80 degrees.

The separator, the positive electrode plate, and the negative electrode plate in the secondary battery have the contact angles and the differences between the contact angles that fall within the foregoing ranges respectively, so that good adhesion can be implemented between the separator, the positive electrode plate, and the negative electrode plate. Therefore, a structure of the secondary battery is more compact, and conduction of ions between the positive and negative electrode plates and the separator becomes smoother, thereby achieving high cycle characteristics and high rate characteristics of the secondary battery.

In any implementation, the secondary battery includes at least one of a lithium secondary battery or a sodium secondary battery.

According to a third aspect of the present application, a power consuming apparatus is provided, including the secondary battery described above.

### DETAILED DESCRIPTION

The following describes implementations of a battery separator, a secondary battery, and a power consuming apparatus in detail. However, there will be cases where unnecessary detailed descriptions are omitted. For example, there are cases where detailed descriptions of well-known matters and repeated descriptions of actually identical structures are omitted. This is to avoid unnecessary redundancy in the following descriptions and to facilitate the understanding by a person skilled in the art.

A "range" disclosed in the present application is defined in a form of a lower limit and an upper limit, and a given range is defined by selecting a lower limit and an upper limit, and the selected lower limit and upper limit define boundaries of a particular range. A range defined in this manner may be inclusive or exclusive of end values, and may be arbitrarily combined, that is, any lower limit may be combined with any upper limit to form a range. For example, if ranges of 60 to 120 and 80 to 110 are listed for a particular parameter, it should be understood that ranges of 60 to 110 and 80 to 120 are also expected. In addition, if minimum range values 1 and 2 are listed, and if maximum range values 3, 4, and 5 are listed, the following ranges can all be expected: 1 to 3, 1 to 4, 1 to 5, 2 to 3, 2 to 4, and 2 to 5. In the present application, unless otherwise specified, a numerical range "a to b" indicates an abbreviated representation of any combination of real numbers between a and b, where both a and b are real numbers. For example, a numerical range "0 to 5" indicates that all real numbers between "0 to 5" have been listed herein, and "0 to 5" is only an abbreviated representation of a combination of these numerical values. In addition, when a parameter is expressed as an integer greater than or equal to 2, it is equivalent to disclosing that the parameter is, for example, an integer of 2, 3, 4, 5, 6, 7, 8, 9, 10, 11, 12, or the like.

Unless otherwise specified, all implementations and optional implementations of the present application may be combined to form new technical solutions.

Unless otherwise specified, all technical features and optional technical features of the present application may be combined with each other to form new technical solutions.

Unless otherwise specified, all steps of the present application may be performed sequentially or randomly, and preferably sequentially. For example, a method includes steps (a) and (b), indicating that the method may include steps (a) and (b) performed sequentially, or may include steps (b) and (a) performed sequentially. For example, reference to "the method may further include step (c)" indicates that step (c) may be added to the method in any order. For example, the method may include steps (a), (b), and (c), or may include steps (a), (c), and (b), or may include steps (c), (a), and (b), and the like.

Unless otherwise specified, "comprising" and "including" mentioned in the present application indicate open inclusion or closed inclusion. For example, "comprising" and "including" may indicate that other components not listed may further be comprised or included, or only listed components may be comprised or included.

Unless otherwise specified, in the present application, the term "or" is inclusive. For example, the phrase "A or B" means "A, B, or both A and B". More specifically, the condition "A or B" is satisfied when any one of the following conditions is satisfied: A is true (or present) and B is false (or absent); A is false (or absent) and B is true (or present); or both A and B are true (or present).

A separator for a battery, as a key component of a secondary battery, has great influence on the performance of the battery. However, existing separators made of PP or PE materials are non-polar and have low surface tension. As a result, the separator has poor wettability to an electrolyte solution and poor adhesion to a surface coating. Surface corona treatment is performed on the battery separator and structures at layers of a plate, so that free-radical reaction can occur on a surface of a treated object to cause cross-linking of polymers. The surface becomes rough and the wettability of the treated object to a polar solvent is increased, surface molecules of the treated object are oxidized and polarized, and ions erode the surface through an electric shock, thereby increasing an adhesion capability of the surface of the treated object. Therefore, the liquid retention performance and the adhesion to a plate of the battery separator can be improved, and the cycle performance and the rate characteristics of the secondary battery are improved.

Based on this, the present application provides a battery separator and a manufacturing method thereof, and a secondary battery and a power consuming apparatus having the separator, which are respectively described in detail below.

### [Battery separator]

The battery separator in the present application includes a base film and a ceramic coating located on at least one side of the base film, where a difference between a contact angle of the base film and a contact angle of the ceramic coating is less than or equal to 15 degrees, and further arbitrarily includes a bonding coating. In the present application, surface corona treatment is performed on each layer, so that the surface energy of each layer is improved, helping improve the wettability and a bonding force.

In some implementations, the difference between the contact angle of the base film and the contact angle of the ceramic coating optionally is 15 degrees, 14 degrees, 13 degrees, 12 degrees, 11 degrees, 10 degrees, 9 degrees, 8 degrees, 7 degrees, 6 degrees, 5 degrees, 4 degrees, 3 degrees, 2 degrees, 1 degree, or 0 degree, or is a range between any two of the foregoing values.

The contact angle of the base film s adjusted by performing corona treatment on a surface of the base film, and through the corona treatment, the surface energy of the surface of the material can be improved, thereby improving the polarity of the surface of the material. The difference between the contact angles of the layers falls within the foregoing range, so that the polarity of the surface of the base film can be improved, and a bonding force between the base film and the coating can be improved. Corona surface treatment is performed on the coated separator again, so that the surface energy of the coated separator is improved, and the adhesion and the wettability to an electrolyte solution of the separator can be improved.

In any implementation, the base film is a base film after corona treatment, power P1 of the corona treatment ranges from 50 W to 200 W, a voltage V1 ranges from 100 V to 230 V, and a time T1 ranges from 0.1 s to 4 s. In addition, a material forming the substrate is not specifically limited. The base film includes one or more of polyethylene, polypropylene, polyimide, polyamide, polyethylene terephthalate, glass fiber, non-woven fabric, or a high-temperature-resistant polyester film, and optionally includes one or more of polyethylene or polypropylene.

In some implementations, the power P1 of the corona treatment for the base film optionally is 50 W, 60 W, 70 W, 80 W, 90 W, 100 W, 110 W, 120 W, 130 W, 140 W, 150 W, 160 W, 170 W, 180 W, 190 W, or 200 W, or is a range between any two of the foregoing values. In some implementations, the power V1 of the corona treatment optionally is 100 V, 110 V, 120 V, 130 V, 140 V, 150 V, 160 V, 170 V, 180 V, 190 V, 200 V, 210 V, 220 V, or 230 V, or is a range between any two of the foregoing values. In some implementations, the time T1 of the corona treatment optionally is 0.1 s, 0.5 s, 1 s, 1.5 s, 2 s, 2.5 s, 3 s, 3.5 s, or 4 s, or is a range between any two of the foregoing values.

In any implementation, the ceramic coating is a ceramic coating after corona treatment, power P2 of the corona treatment ranges from 50 W to 500 W, a voltage V2 ranges from 100 V to 230 V, and a time T2 ranges from 0.1 s to 6 s. In addition, a material forming the ceramic coating is not specifically limited. The ceramic coating includes one or more of Al₂O₃, AlO(OH), SiO₂, TiO₂, MgO, CaO, ZnO₂, ZrO₂, or SnO₂, and optionally includes Al₂O₃.

In some implementations, the power P2 of the corona treatment for the ceramic coating optionally is 50 W, 60 W, 70 W, 80 W, 90 W, 100 W, 110 W, 120 W, 130 W, 140 W, 150 W, 160 W, 170 W, 180 W, 190 W, 200 W, 210 W, 220 W, 230 W, 240 W, 250 W, 260 W, 270 W, 280 W, 290 W, 300 W, 310 W, 320 W, 330 W, 340 W, 350 W, 360 W, 370 W, 380 W, 390 W, 400 W, 410 W, 420 W, 430 W, 440 W, 450 W, 460 W, 470 W, 480 W, 490 W, or 500 W, or a range between any two of the foregoing values. In some implementations, the power V2 of the corona treatment optionally is 100 V, 110 V, 120 V, 130 V, 140 V, 150 V, 160 V, 170 V, 180 V, 190 V, 200 V, 210 V, 220 V, or 230 V, or is a range between any two of the foregoing values. In some implementations, the time T2 of the corona treatment optionally is 0.1 s, 0.5 s, 1 s, 1.5 s, 2 s, 2.5 s, 3 s, 3.5 s, 4 s, 4.5 s, 5 s, 5.5 s, or 6 s, or is a range between any two of the foregoing values.

Corona treatment is performed on the substrate or the ceramic coating, so that content of polar groups on the surface of the material can be improved, thereby improving the polarity and the surface energy of the material and helping improve the wettability and the bonding force of the material. In addition, the corona conditions can further prevent the processed material from being damaged. For example, energy released during the corona treatment causes the material to shrink, affecting a mechanical strength of the material. Based on proper improvement on the surface energy of the material, the wettability of the separator to an electrolyte solution can be improved, and the adhesion to a surface coating and the adhesion between the separator and positive and negative electrode plates can be improved.

In any implementation, the separator further includes a bonding coating, the bonding coating is located on a side of the ceramic coating away from the base film, and a difference between the contact angle of the ceramic coating and a contact angle of the bonding coating ranges from 2 degrees to 15 degrees. In addition, a material forming the bonding coating is not specifically limited and may be a polymer. Specifically, the material may include one or more of polyvinylidene fluoride, a vinylidene fluoride-hexafluoropropylene polymer, a styrene-butadiene polymer, polyacrylic acid, styrene butadiene rubber, sodium carboxymethyl cellulose, polyamide, polyacrylonitrile, polyacrylates, polyacrylate, or hydroxymethyl cellulose sodium, and optionally include polyvinylidene fluoride.

In some implementations, the difference between the contact angle of the ceramic coating and the contact angle of the bonding coating optionally is 15 degrees, 14 degrees, 13 degrees, 12 degrees, 11 degrees, 10 degrees, 9 degrees, 8 degrees, 7 degrees, 6 degrees, 5 degrees, 4 degrees, 3 degrees, or 2 degrees, or is a range between any two of the foregoing values.

The material is used to form the bonding coating and the difference between the contact angle of the ceramic coating and the contact angle of the bonding coating falls within the range, so that the surface energy of the bonding coating can be close to the surface energy of the ceramic coating, thereby achieving a good adhesion effect.

In any implementation, the bonding coating is a bonding coating after corona treatment, power P3 of the corona treatment ranges from 50 W to 600 W, a voltage V3 ranges from 100 V to 230 V, and a time T3 ranges from 0.1 s to 5 s.

In some implementations, the power P3 of the corona treatment for the ceramic coating optionally is 50 W, 60 W, 70 W, 80 W, 90 W, 100 W, 110 W, 120 W, 130 W, 140 W, 150 W, 160 W, 170 W, 180 W, 190 W, 200 W, 210 W, 220 W, 230 W, 240 W, 250 W, 260 W, 270 W, 280 W, 290 W, 300 W, 310 W, 320 W, 330 W, 340 W, 350 W, 360 W, 370 W, 380 W, 390 W, 400 W, 410 W, 420 W, 430 W, 440 W, 450 W, 460 W, 470 W, 480 W, 490 W, 500 W, 510 W, 520 W, 530 W, 540 W, 550 W, 560 W, 570 W, 580 W, 590 W, or 600 W, or a range between any two of the foregoing values. In some implementations, the power V3 of the corona treatment optionally is 100 V, 110 V, 120 V, 130 V, 140 V, 150 V, 160 V, 170 V, 180 V, 190 V, 200 V, 210 V, 220 V, or 230 V, or is a range between any two of the foregoing values. In some implementations, the time T3 of the corona treatment optionally is 0.1 s, 0.5 s, 1 s, 1.5 s, 2 s, 2.5 s, 3 s, 3.5 s, 4 s, 4.5 s, or 5 s, or is a range between any two of the foregoing values.

Based on this, by setting the corona treatment to the foregoing conditions, surface processing on the material can be implemented, that is, the surface energy of the material is properly improved, and the corona-treated material can be prevented from being damaged.

In any implementation, the contact angle of the base film ranges from 60 degrees to 80 degrees. The contact angle of the ceramic coating ranges from 60 degrees to 80 degrees. The contact angle of the bonding coating ranges from 40 degrees to 60 degrees.

In some implementations, the contact angle of the base film optionally is 60 degrees, 62 degrees, 64 degrees, 66 degrees, 68 degrees, 70 degrees, 72 degrees, 74 degrees, 76 degrees, 78 degrees, or 80 degrees, or is a range between any two of the foregoing values.

The contact angle of the base film and the contact angle of the ceramic coating fall within the foregoing ranges, so that the surface energy of the base film can be close to the surface energy of the ceramic coating, thereby achieving a good adhesion effect between the base film and the ceramic coating. The contact of the bonding coating falls within the foregoing range, so that an effect that the separator is adhered to an electrode plate can be better achieved.

In any implementation, a liquid absorbing rate of the separator ranges from 4.5 mm/s to 6 mm/s. The separator has the liquid absorbing rate falling with the foregoing range, so that when the separator is immersed in an electrolyte solution, the electrolyte solution can quickly soak the separator to implement fast conduction of ions, thereby improving ionic conductivity of a battery, and further improving the cycle performance and the rate characteristics of the battery.

In some implementations, the liquid absorbing rate of the separator optionally is 4.5 mm/s, 4.6 mm/s, 4.7 mm/s, 4.8 mm/s, 4.9 mm/s, 5 mm/s, 5.1 mm/s, 5.2 mm/s, mm/s, 5.3 mm/s, 5.4 mm/s, 5.5 mm/s, 5.6 mm/s, 5.7 mm/s, 5.8 mm/s, 5.9 mm/s, or 6 mm/s, or is a range between any two of the foregoing values.

In any implementation, a bonding force between the base film and the ceramic coating ranges from 2.5 N/mm to 4 N/mm. When the bonding force between the base film and the ceramic coating falls within the foregoing range, a structure of the separator is more compact, so that the separator can better implement a function thereof, thereby improving the cycle performance and the rate characteristics of a battery.

In some implementations, the bonding force between the base film and the ceramic coating optionally is 2.5 N/mm, 2.6 N/mm, 2.7 N/mm, 2.8 N/mm, 2.9 N/mm, 3 N/mm, 3.1 N/mm, 3.2 N/mm, 3.3 N/mm, 3.4 N/mm, 3.5 N/mm, 3.6 N/mm, 3.7 N/mm, 3.8 N/mm, 3.9 N/mm, or 4 N/mm, or is a range between any two of the foregoing values.

In any implementation, the separator further includes a bonding coating located on a side of the ceramic coating away from the base film, and a difference between a contact angle of the positive electrode plate and a contact angle of the bonding coating is less than or equal to 20 degrees; and/or a difference between a contact angle of the negative electrode plate and the contact angle of the bonding coating is less than or equal to 20 degrees. The contact angle of the positive electrode plate ranges from 40 degrees to 80 degrees; and/or the contact angle of the negative electrode plate ranges from 40 degrees to 80 degrees.

In some implementations, the difference between the contact angle of the positive electrode plate and/or the negative electrode plate and the contact angle of the bonding coating optionally is 20 degrees, 19 degrees, 18 degrees, 17 degrees, 16 degrees, 15 degrees, 14 degrees, 13 degrees, 12 degrees, 11 degrees, 10 degrees, 9 degrees, 8 degrees, 7 degrees, 6 degrees, 5 degrees, 4 degrees, 3 degrees, 2 degrees, 1 degree, or 0 degree, and the contact angle of the positive electrode plate and/or the negative electrode plate optionally is 40 degrees, 45 degrees, 50 degrees, 55 degrees, 60 degrees, 65 degrees, 70 degrees, 75 degrees, or 80 degrees, or is a range between any two of the foregoing values.

In the separator in the present application, the separator, the positive electrode plate, and the negative electrode plate in the secondary battery have the contact angles and the differences between the contact angles that fall within the foregoing ranges respectively, so that good adhesion can be implemented between the separator, the positive electrode plate, and the negative electrode plate. Therefore, a structure of the secondary battery is more compact, and conduction of ions between the positive and negative electrode plates and the separator becomes smoother, thereby achieving high cycle characteristics and high rate characteristics of the secondary battery.

### [Positive electrode plate]

The positive electrode plate includes a positive electrode current collector and positive electrode film layers arranged on two side surfaces of the positive electrode current collector, where the positive electrode film layer includes a positive electrode active material.

In an example, the positive electrode current collector has two opposite surfaces in a thickness direction thereof, and the positive electrode film layers are arranged on the two opposite surfaces of the positive electrode current collector.

In some implementations, the positive electrode current collector may be a metal foil or a composite current collector. For example, as a metal foil, an aluminum foil may be used. The composite current collector may include a polymer material substrate and a metal layer formed on at least one surface of the polymer material substrate. The composite current collector may be formed by forming a metal material (aluminum, aluminum alloy, nickel, nickel alloy, titanium, titanium alloy, silver, silver alloy, or the like) on the polymer material substrate (for example, a substrate of polypropylene(PP), polyethylene terephthalate (PET), polybutylene terephthalate (PBT), polystyrene (PS), or polyethylene (PE)).

In some implementations, the positive electrode active material may be a positive electrode active material well-known in the art for use in a battery. In an example, the positive electrode active material may include at least one of the following materials: lithium-containing phosphate of an olivine structure, a lithium transition metal oxide, and respective modified compounds thereof. However, the present application is not limited to these materials, and other conventional materials that can be used as a positive electrode active material of a battery may also be used. These positive electrode active materials may be used alone, or two or more of the positive electrode active materials may be combined for use. An example of the lithium transition metal oxide may include, but not limited to, at least one of a lithium-cobalt oxide (for example, LiCoO₂), a lithium-nickel oxide (for example, LiNiO₂), a lithium-manganese oxide (for example, LiMnO₂ or LiMn₂O₄), a lithium-nickel-cobalt oxide, a lithium-nickel-manganese oxide, a lithium-nickel-cobalt-manganese oxide (for example, LiNi_{1/3}Co_{1/3}Mn_{1/3}O₂ (may also be referred to as NCM₃₃₃ for short), LiNi_{0.5}Co_{0.2}Mn_{0.3}O₂ (may also be referred to as NCM₅₂₃ for short), LiNi_{0.5}Co_{0.25}Mn_{0.25}O₂ (may also be referred to as NCM₂₁₁ for short), LiNi_{0.6}Co_{0.2}Mn_{0.2}O₂ (may also be referred to as NCM₆₂₂ for short), or LiNi_{0.8}Co_{0.1}Mn_{0.1}O₂ (may also be referred to as NCM₈₁₁ for short)), a lithium-nickel-cobalt-aluminum oxide (for example, LiNi_{0.85}Co_{0.15}Al_{0.05}O₂), and modified compounds thereof. An example of the lithium-containing phosphate of the olivine structure may include, but not limited to, at least one of lithium iron phosphate (for example, LiFePO₄ (may also be referred to as LFP for short)), a composite material of lithium iron phosphate and carbon, lithium manganese phosphate (for example, LiMnPO₄), a composite material of lithium manganese phosphate and carbon, lithium manganese iron phosphate, and a composite material of lithium manganese iron phosphate and carbon.

In some implementations, the positive electrode film layer optionally includes a binder. In an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and fluorine-containing acrylate resin.

In some implementations, the positive electrode film layer further optionally includes a conductive agent (Super P). In an example, the conductive agent may include at least one of superconducting carbon, acetylene black, carbon black, Ketjen black, carbon dots, carbon nanotubes, graphene, and carbon nanofibers.

In some implementations, the positive electrode plate may be prepared in the following manner: dispersing the foregoing components for preparing the positive electrode plate, for example, the positive electrode active material, the conductive agent, the binder, and any other components, in a solvent (for example, N-methyl pyrrolidone) to form a positive electrode slurry; and coating the positive electrode slurry on the positive electrode current collector, followed by drying, cold pressing, and other procedures, to obtain the positive electrode plate.

### [Negative electrode plate]

The negative electrode plate includes a negative electrode current collector and negative electrode film layers arranged on two side surfaces of the negative electrode current collector, where the negative electrode film layer includes a negative electrode active material.

In an example, the negative electrode current collector has two opposite surfaces in a thickness direction thereof, and the negative electrode film layers are arranged on the two surfaces of the negative electrode current collector.

In some implementations, the negative electrode current collector may be a metal foil or a composite current collector. For example, as a metal foil, a copper foil may be used. The composite current collector may include a polymer material substrate and a metal layer formed on at least one surface of the polymer material substrate. The composite current collector may be formed by forming a metal material (copper, copper alloy, nickel, nickel alloy, titanium, titanium alloy, silver, silver alloy, or the like) on the polymer material substrate (for example, a substrate of polypropylene(PP), polyethylene terephthalate (PET), polybutylene terephthalate (PBT), polystyrene (PS), or polyethylene (PE)).

In some implementations, the negative electrode active material may be a negative electrode active material well-known in the art for use in a battery. For example, the negative electrode active material may include at least one of the following materials: artificial graphite, natural graphite, soft carbon, hard carbon, a silicon-based material, a tin-based material, and lithium titanate. The silicon-based material may be at least one selected from elemental silicon, a silicon oxide, a silicon-carbon compound, a silicon-nitrogen compound, and silicon alloy. The tin-based material may be at least one selected from elemental tin, a tin oxide, and tin alloy. However, the present application is not limited to these materials, and other conventional materials that can be used as a negative electrode active material of a battery may also be used. These negative electrode active materials may be used alone, or two or more of the negative electrode active materials may be combined for use.

In some implementations, the negative electrode film layer further optionally includes a binder. The binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), poly(methyl methacrylate) (PMAA), and carboxymethyl chitosan (CMCS).

In some embodiments, the negative electrode film layer further optionally includes a conductive agent. The conductive agent may be selected from at least one of superconducting carbon, acetylene black, carbon black, Ketjen black, carbon dots, carbon nanotubes, graphene, and carbon nanofibers.

In some implementations, the negative electrode film layer further optionally includes another additive such as a thickener (for example, sodium carboxymethyl cellulose (CMC-Na)).

In some implementations, the negative electrode plate may be prepared in the following manner: dispersing the foregoing components for preparing the negative electrode plate, for example, the negative electrode active material, the conductive agent, the binder, and any other components, in a solvent (for example, deionized water) to form a negative electrode slurry; and coating the negative electrode slurry on the negative electrode current collector, followed by drying, cold pressing, and other procedures, to obtain the negative electrode plate.

### [Electrolyte]

The electrolyte transmits ions between the positive electrode plate and the negative electrode plate. A type of the electrolyte is not specifically limited in the present application, and may be selected according to requirements. For example, the electrolyte may be liquid, gelled, or all solid.

In some implementations, the electrolyte uses an electrolyte solution. The electrolyte solution includes an electrolyte salt and a solvent.

In some implementations, the electrolyte salt may be selected from at least one of lithium hexafluorophosphate, lithium tetrafluoroborate, lithium perchlorate, lithium hexafluoroborate, lithium bis(fluorosulfonyl)imide, lithium bis-trifluoromethanesulfonimide, lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some implementations, the electrolyte solution further optionally includes an additive. For example, the additive may include a negative electrode film forming additive, a positive electrode film forming additive, and may further include an additive that can improve particular battery performance, for example, an additive that improves battery overcharging performance or an additive that improves high or low temperature performance of a battery.

### [Preparation method of a battery separator]

The battery separator in the present application is prepared by using the following method: The battery separator in the present application has a base film, a ceramic coating, and an optional bonding coating sequentially, corona treatment is first performed on a surface of the base film to improve the polarity of the surface of the base film and improve a bonding force between the base film and the coatings; and corona surface treatment is performed on the coated separator again, so that the surface energy of the coated separator is improved, and the adhesion and the wettability to an electrolyte solution of the separator can be improved.

### [Secondary battery]

Generally, the secondary battery includes a positive electrode plate, a negative electrode plate, an electrolyte, and a separator. During charging and discharging of the battery, active ions move between the positive electrode plate and the negative electrode plate for intercalation and deintercalation. The electrolyte transmits ions between the positive electrode plate and the negative electrode plate. The separator is arranged between the positive electrode plate and the negative electrode plate to mainly play a role in preventing a short circuit between a positive electrode and a negative electrode while allowing ions to pass through.

The secondary battery in the present application has the separator in the present application, thereby having high cycle characteristics and high rate characteristics.

### Example

Examples of the present application will be described hereinafter. The examples described below are exemplary and only used to explain the present application, and should not be construed as a limitation to the present application. Where specific techniques or conditions are not specified in the examples, the techniques or conditions described in the literatures of the art or the product specifications are followed. The reagents or instruments for which no manufacturers are noted are all common products commercially available from the market.

### I. Preparation method

### Example 1

### 1) Separator

Polyethylene was used as a base film, where a length of the base film was 100 cm, and a width was 10 cm, and corona treatment was performed on the base film, where power P1 was 200 W, a voltage V1 was 150 V, and a time T1 was 3.5 s; and
a specific amount of a ceramic material Al₂O₃ was weighted and dispersed in water to obtain a ceramic material slurry. The ceramic material slurry was sprayed on two opposite surfaces of the base film polyethylene after the corona treatment to prepare a ceramic coating, after spraying was completed, the ceramic coating was placed in a 60°C oven for baking for 30 min, and corona treatment was performed on a surface of baked ceramic coating, where power P2 was 500 W, a voltage V2 was 220 V, and a time T2 was 5 s; and
a specific amount of a binder polyvinylidene fluoride was weighted and dissolved in a solvent N-methyl-2-pyrolidone to obtain a bonding slurry, the bonding slurry was sprayed on two opposite surfaces of the ceramic coating after the corona treatment to prepare a bonding coating, after spraying was completed, the bonding coating was placed in a 60°C oven for baking for 30 min, and corona treatment was performed on a surface of the baked bonding coating, where power P3 was 589 W, a voltage V3 was 200 V, and a time T3 was 4 s, to obtain a separator.

### 2) Electrolyte solution

In a glove box filled with argon (where water content was less than 10 ppm, and oxygen content was less than 1 ppm), after ethylene carbonate and ethyl methyl carbonate (with a volume ratio of 3:7) were well mixed according to a specific ratio, an appropriate amount of LiPF₆ was slowly added to a non-aqueous organic solvent, and after a lithium salt was completely dissolved, a 1 mol/L electrolyte solution was obtained. Conductivity of the electrolyte solution is 8.5 mS/cm.

### 3) Preparation of a positive electrode plate

A positive electrode active material LiNi_{0.5}Co_{0.2}Mn_{0.3}O₂, a conductive agent Super P, and a binder polyvinylidene fluoride (PVDF) were mixed at a mass ratio of 90:5:5. A solvent N-methylpyrrolidone (NMP) was added and vacuum stirred until the mixture was homogeneous, to obtain a positive electrode slurry with solid content of 65 wt%. The positive electrode slurry was coated on an aluminum foil of a current collector and dried at 85°C followed by cold pressing, trimming, slicing, and slitting, and then further dried under vacuum at 85°C for 4 h, to obtain a positive electrode plate.

### 4) Preparation of a negative electrode plate

A negative electrode active material graphite and a specific amount of silicon were mixed with a conductive agent Super P, a thickener CMC, and a binder styrene-butadiene rubber (SBR) at a mass ratio of 90:4:3:3 and were dissolved in deionized water, to obtain a negative electrode slurry. The negative electrode slurry was obtained under the action of a vacuum blender, where solid content in the negative electrode slurry was 55 wt%. The negative electrode slurry was coated on a copper foil of a current collector and dried at 85°C followed by cold pressing, trimming, slicing, and slitting, and then further dried under vacuum at 120°C for 12 h, to obtain a negative electrode plate.

### 5) Preparation of a battery

The prepared positive electrode plate, separator, and negative electrode plate were laminated in order, so that the separator was located between the positive electrode plate and the negative electrode plate to separate the positive electrode plate from the negative electrode plate, wound to obtain a bare battery core, and welded with tabs. The bare battery core was placed in an outer package. The prepared electrolyte solution was injected into a dried battery core, followed by packaging, standing, formation, shaping, capacity testing, and the like, to obtain a lithium secondary battery in Example 1.

In the present application, a contact angle of a surface of a material is measured in the following manner:
A plate or a thin film was fixed on a standard glass plate and then was placed on a storage table; and a needle was inserted into deionized water, the deionized water was slowly drawn into a syringe, the needle was put upward, a piston was squeezed to squeeze out air in the syringe, and the needle was then placed in a fixing base. A height of a specimen stage was adjusted, to enable the specimen to rise and carry on squeezed liquid drops dripped on a surface of powder to form droplets, and a contact angle was automatically measured by using a contact angle tester (SINDIN, whose model is SDC-200S) and fitting was performed to obtain a value, to record the contact angle.

Preparation methods of secondary batteries in Examples 2 to 15 and secondary batteries in Comparative Examples 1 to 3 are similar to the preparation method of the secondary battery in Example 1, but parameters of the corona treatment on the base film, the ceramic coating, and the bonding coating or a contact angle of the positive electrode plate/the negative electrode plate are different. For product parameters, reference may be made to Table 1.

### II. Performance test

### 1. Performance test of a separator

### 1) Test of a bonding force

A sampler whose length is 100 mm and width is 20 mm was used to perform sampling, after a stainless steel plate was wiped by using alcohol, a double-sided tape (a specification is 3M9730-100) of a standard width was evenly adhered to the steel plate, the other surface of the double-sided tape was torn up, and the separator was evenly adhered and a fixture was assembled, to test a bonding force between the base film and the coating of the separator on a tensile machine (a model is: INSTRON, Model: 3365).

### 2) Test of a liquid absorbing capability

A sampler whose length is 100 mm and width is 20 mm was used to perform sampling, a sample was soaked in a 1 mol/L electrolyte solution in which LiPF₆/EC:DEC=1:1 at 60°C for 4 h, and the separator was then taken out and suspended for 30 s, to test weights of the separator before and after soaking on electronic balance ((a weight after soaking-a weight before soaking)/the weight before soaking).

### 3) Test of a liquid absorbing rate

A sampler whose length is 100 mm and width is 5 mm was used to perform sampling, a sample was fixed (horizontally suspended), a drop of electrolyte solution (1 mol/L and LiPF₆/EC:DEC=1:1) was dripped on the sample by using a dropper, and a length of a liquid absorbing strip of the sample after 60 s was recorded, where a ratio of the length to the time is a liquid absorbing rate.

### 2. Performance test of a battery

### 1) Cycle performance

At 25°C, the prepared lithium secondary battery was charged at a constant current of 0.33 C to 3.65 V, then charged at a constant current voltage of 0.05 C, left standing for 10 minutes, then discharged at a constant current of 0.33 C to 2.5 V, and a discharge capacity was recorded as C0. 1000 cycles were performed according to the foregoing charging and discharging process, a discharge capacity after the 1000 cycles was defined as C1, and a cycle capacity retention rate of the battery was equal to C1/C0×100%.

### 2) Fast charging performance

At 25°C, the prepared lithium secondary battery was charged at a constant current of 2 C to 3.65 V and then charged at a constant voltage of 0.05 C, and a charge capacity in this case was defined as C1; the battery was then left standing for 10 minutes and discharged at a constant current of 1 C to 2.5 V, and a discharge capacity was recorded as C0. The fast charging performance was represented as a value of C0/C1, and a larger value indicated more excellent fast charging performance.

### III. Analysis of test results of examples and comparative examples

In accordance with the above methods, the batteries in the examples and comparative examples are prepared, and various performance parameters are measured. For the measured results, reference may be made to Table 1 below.

**Table 1**

| Sequence number | Separator | | | | | | | | | | | | | | Contact angle of positive electrode plate | Contact angle of negative electrode plate | Battery | |
|---|---|---|---|---|---|---|---|---|---|---|---|---|---|---|---|---|---|---|
| | Base film | | | | Ceramic coating | | | | Bonding coating | | | | Liquid absorbing rate | Bonding force | | | Cycle performance (500 cycles) | Fast charging performance (C0/C1) |
| | Contact (60 degrees to 80 | Corona treatment | | | Contact (60 degrees to 80 degrees) | Corona treatment | | | Contact angle/degrees (40 degrees to 60 | Corona treatment | | | | | | | | |
| | | Power/W | Voltage/V | Time/s | | Power/W | Voltage/V | Time's | | Power/W | Voltage/V | Time/s | | | | | | |
| Example 1 | 75 | 200 | 150 | 3.5 | 68 | 500 | 220 | 5 | 53 | 589 | 200 | 4 | 5.7 | 3.45 | 52 | 52 | 93.50% | 84.50% |
| Example 2 | 79 | 180 | 150 | 3.5 | 68 | 500 | 220 | 5 | 53 | 589 | 200 | 4 | 4.8 | 3 | 58 | 58 | 93.00% | 82.50% |
| Example 3 | 79 | 200 | 150 | 3 | 68 | 500 | 220 | 5 | 53 | 589 | 200 | 4 | 5 | 321 | 56 | 56 | 93.25% | 83.50% |
| Example 4 | 79 | 200 | 150 | 3 | 68 | 500 | 220 | 5 | 53 | 589 | 200 | 4 | 5.1 | 323 | 55 | 55 | 93.20% | 83.50% |
| Example 5 | 79 | 200 | 100 | 3.5 | 68 | 500 | 220 | 5 | 53 | 589 | 200 | 4 | 5.3 | 3.34 | 56 | 56 | 93.50% | 84.50% |
| Example 6 | 75 | 200 | 150 | 3.5 | 73 | 50 | 220 | 5 | 53 | 589 | 200 | 4 | 5.4 | 3.15 | 51 | 57 | 92.12% | 81.50% |
| Example 7 | 75 | 200 | 150 | 3.5 | 72 | 80 | 220 | 5 | 53 | 589 | 200 | 4 | 5.4 | 3.15 | 51 | 57 | 92.00% | 82.50% |
| Example 8 | 75 | 200 | 150 | 3.5 | 71 | 180 | 220 | 5 | 53 | 589 | 200 | 4 | 5.6 | 3.19 | 49 | 53 | 90.50% | 80.50% |
| Example 9 | 75 | 200 | 150 | 3.5 | 70 | 500 | 220 | 5 | 53 | 589 | 200 | 4 | 5.7 | 3.19 | 48 | 52 | 88.50% | 79.50% |
| Example 10 | 75 | 200 | 150 | 3.5 | 68 | 500 | 220 | 5 | 53 | 589 | 200 | 4 | 4.9 | 3.01 | 54 | 58 | 92.50% | 83.50% |
| Example 11 | 75 | 200 | 150 | 3.5 | 68 | 500 | 220 | 5 | 58 | 50 | 200 | 4 | 4.8 | 3.19 | 54 | 56 | 92.50% | 83.50% |
| Example 12 | 75 | 200 | 150 | 3.5 | 68 | 500 | 220 | 5 | 57 | 180 | 200 | 4 | 4.9 | 3.19 | 53 | 55 | 92.15% | 81.50% |
| Example 13 | 75 | 200 | 150 | 3.5 | 68 | 500 | 220 | 5 | 56 | 450 | 200 | 4 | 5.2 | 3.28 | 51 | 54 | 92.15% | 81.50% |
| Example 14 | 75 | 200 | 150 | 3.5 | 68 | 500 | 220 | 5 | 53 | 589 | 200 | 4 | 5.7 | 3.45 | 48 | 52 | 93.50% | 84.50% |
| Example 15 | 75 | 200 | 150 | 3.5 | 68 | 500 | 220 | 5 | 56 | 589 | 200 | 3 | 5.4 | 3.38 | 51 | 54 | 92.50% | 82.50% |
| Comparative Example 1 | 145 | / | / | / | 126 | / | / | / | 102 | / | / | / | 4.1 | 1.21 | 143 | 135 | 83.90% | 75.50% |
| Comparative Example 2 | 75 | 200 | 150 | 3.5 | 112 | / | / | / | 101 | / | / | / | 4.3 | 1.25 | 112 | 121 | 85.60% | 76.50% |
| Comparative Example 3 | 145 | / | / | / | 92 | 500 | 220 | 5 | 99 | / | / | / | 4.5 | 1.89 | 91 | 98 | 88.50% | 78.50% |

It can be learned from Table 1 that, the separator in Examples 1 to 15 of the present application includes a base film and a ceramic coating located on at least one side of the base film, where a difference between a contact angle of the base film and a contact angle of the ceramic coating is less than or equal to 15 degrees. A capacity retention rate of a battery prepared by using the separator after 500 cycles is relatively high, and the battery has excellent fast charging performance. A main reason is that the corona treatment in the present application is performed on the base film of the separator and the separator, so that the polarities and the surface energy of the base film, the ceramic coating, and the bonding coating are improved, where a specific representation is that the contact angles between various layers fall within the ranges in the present application. Therefore, the adhesion between the layers is improved, thereby improving the cycle performance and the fast charging performance of the battery.

In addition, the inventor has found through researches that attenuation of the battery is mainly affected by liquid retention in a later period of cycles of the secondary battery. Therefore, improving the liquid retention of the separator helps improve the cycle performance. In addition, improvement of the bonding force and improvement of the liquid retention also help improve an interface state of a plate, which is conducive to the rate performance. In Examples 1 to 15 of the present application, after corona treatment is performed on a film layer of the separator, the polarity of the surface of the material is improved, and the affinity between the material and an electrolyte solution that is also a polar substance is improved. Therefore, the separator has a high liquid absorbing rate and a good liquid retention rate, which also helps improve the cycle performance and the fast charging performance of the battery.

In addition, it can be learned from Table 1 that, in Comparative Examples 1 to 3, corona treatment is not performed on the base film and the ceramic coating of the separator in Comparative Example 1; corona treatment is not performed on the ceramic coating and the bonding coating of the separator in Comparative Example 2; and corona treatment is not performed on the base film and the bonding coating of the separator in Comparative Example 3. As a result, the cycle characteristics and the fast charging characteristics of secondary batteries prepared based on the separators are significantly reduced, and the requirements of the present application cannot be satisfied.

It should be noted that, the present application is not limited to the foregoing implementations. The foregoing implementations are merely examples, and any implementation within the scope of the technical solutions of the present application and having substantially the same composition and the same effects as the technical idea is included in the technical scope of the present application. In addition, other implementations constructed by applying various modifications conceivable to a person skilled in the art to the implementations and combining some of the constituent elements of the implementations without departing from the scope of the essence of the present application are also included in the scope of the present application.

## Claims

1. A separator, comprising a base film and a ceramic coating located on at least one side of the base film, wherein
a difference between a contact angle of the base film and a contact angle of the ceramic coating is less than or equal to 15 degrees, and preferably, less than or equal to 10 degrees.

2. The separator according to claim 1, wherein the base film is a base film after corona treatment, power P1 of the corona treatment ranges from 50 W to 200 W, a voltage V1 ranges from 100 V to 230 V, and a time T1 ranges from 0.1 s to 4 s.

3. The separator according to claim 1 or 2, wherein the ceramic coating is a ceramic coating after corona treatment, power P2 of the corona treatment ranges from 50 W to 500 W, a voltage V2 ranges from 100 V to 230 V, and a time T2 ranges from 0.1 s to 6 s.

4. The separator according to any one of claims 1 to 3, wherein the separator further comprises a bonding coating, the bonding coating is located on a side of the ceramic coating away from the base film, and a difference between the contact angle of the ceramic coating and a contact angle of the bonding coating ranges from 2 degrees to 15 degrees.

5. The separator according to any one of claims 1 to 4, wherein the bonding coating is a bonding coating after corona treatment, power P3 of the corona treatment ranges from 50 W to 600 W, a voltage V3 ranges from 100 V to 230 V, and a time T3 ranges from 0.1 s to 5 s.

6. The separator according to any one of claims 1 to 5, wherein the contact angle of the base film ranges from 60 degrees to 80 degrees.

7. The separator according to any one of claims 1 to 6, wherein the contact angle of the ceramic coating ranges from 60 degrees to 80 degrees.

8. The separator according to any one of claims 1 to 7, wherein the contact angle of the bonding coating ranges from 40 degrees to 60 degrees.

9. The separator according to any one of claims 1 to 8, wherein the base film comprises one or more of polyethylene, polypropylene, polyimide, polyamide, polyethylene terephthalate, glass fiber, non-woven fabric, or a high-temperature-resistant polyester film, and optionally comprises one or more of polyethylene or polypropylene.

10. The separator according to any one of claims 1 to 9, wherein the ceramic coating comprises one or more of Al₂O₃, AlO(OH), SiO₂, TiO₂, MgO, CaO, ZnO₂, ZrO₂, or SnO₂, and optionally comprises Al₂O₃.

11. The separator according to any one of claims 1 to 10, wherein the bonding coating comprises one or more of polyvinylidene fluoride, a vinylidene fluoride-hexafluoropropylene polymer, a styrene-butadiene polymer, polyacrylic acid, styrene butadiene rubber, sodium carboxymethyl cellulose, polyamide, polyacrylonitrile, polyacrylates, polyacrylate, or hydroxymethyl cellulose sodium, and optionally comprises polyvinylidene fluoride.

12. The separator according to any one of claims 1 to 11, wherein a liquid absorbing rate of the separator ranges from 4.5 mm/s to 6 mm/s.

13. The separator according to any one of claims 1 to 12, wherein a bonding force between the base film and the ceramic coating ranges from 2.5 N/mm to 4 N/mm.

14. A secondary battery, comprising a positive electrode plate, a negative electrode plate, and the separator according to any one of claims 1 to 13.

15. The secondary battery according to claim 14, wherein the separator further comprises a bonding coating located on a side of the ceramic coating away from the base film, and a difference between a contact angle of the positive electrode plate and a contact angle of the bonding coating is less than or equal to 20 degrees; and/or
a difference between a contact angle of the negative electrode plate and the contact angle of the bonding coating is less than or equal to 20 degrees.

16. The secondary battery according to claim 14 or 15, wherein the contact angle of the positive electrode plate ranges from 40 degrees to 80 degrees; and/or the contact angle of the negative electrode plate ranges from 40 degrees to 80 degrees.

17. The secondary battery according to any one of claims 14 to 16, wherein the secondary battery comprises at least one of a lithium secondary battery or a sodium secondary battery.

18. A power consuming apparatus, comprising the secondary battery according to any one of claims 14 to 17.
